# EUROPEAN PATENT SPECIFICATION

(11) **EP 1 846 703 B1**
(45) Date of publication and mention of the grant of the patent: **18.11.2009**
(21) Application number: 06720631.8
(22) Date of filing: 10.02.2006
(51) Int. Cl.: F25B 49/02, F28B 11/00

(54) **CONDENSER-FAN ARRANGEMENT AND CONTROL METHOD THEREFORE**
KONDENSATOR-LÜFTER-ANORDNUNG UND STEUERVERFAHREN DAFÜR
AGENCEMENT DE CONDENSATEUR-VENTILATEUR ET SON PROCEDE DE COMMANDE

(30) Priority: 10.02.2005 US 651723 P
(43) Date of publication of application: 24.10.2007
(73) Proprietor: YORK INTERNATIONAL CORPORATION, York Pennsylvania 17403 (US)
(72) Inventor: CASKEY, Curtis, W., York, PA 17404 (US); KESTER, Douglas, A., York, PA 17404 (US); REARDON, Anthony, J., Columbia, PA 17512 (US)
(74) Representative: Wolff, Felix
(86) International application number: PCT/US2006/004794
(87) International publication number: WO 2006/086664

(56) References cited:
- US-A- 3 191 399
- US-A- 5 115 644
- US-A1- 2004 089 002
- US-B1- 6 272 870

## Description

### FIELD OF THE INVENTION

The present invention relates generally to a condenser arrangement for a heating, ventilation, and air conditioning (HVAC) system.

### BACKGROUND OF THE INVENTION

An HVAC system generally includes a closed loop refrigeration system with at least one evaporator, at least one condenser and at least one compressor. As the refrigerant travels through the evaporator, it absorbs heat from a heat transfer fluid to be cooled and changes from a liquid to a vapor phase. After exiting the evaporator, the refrigerant proceeds to a compressor, then a condenser, then an expansion valve, and back to the evaporator, repeating the refrigeration cycle. The fluid to be cooled passes through the evaporator in a separate fluid channel and is cooled by the evaporation of the refrigerant. The cooled fluid can then be sent to a distribution system for cooling the spaces to be conditioned, or it can be used for other refrigeration purposes.

High capacity HVAC systems may include multiple refrigerant circuits or multiple compressors connected in the refrigerant loop. Air-cooled refrigeration systems that utilize multiple compressors, arranged in tandem (parallel), typically utilize a single condenser coil that is sized to handle the load of all of the compressors operating simultaneously. This results in a condenser that has excessive heat exchange capacity when less than all of the compressors in the system are operating, essentially making the condenser coils oversized for the system operating. Making this problem worse, condenser coils are often manufactured oversized, with corresponding increased airflows, with respect to the system full load requirements, in order to meet the ever-increasing efficiency requirements for modem refrigeration systems. The condensers present in these systems are typically installed outdoors and/or in locations subject to outdoor ambient conditions, particularly temperature. When the outdoor ambient temperature falls, the amount of heat being removed from the refrigerant in the condenser increases. The increased heat removal in the condenser can result in a decrease in the refrigerant pressure at the suction line to the compressor. A decrease in suction pressure to the compressor results in a lowering of the temperature of the refrigerant at the evaporator. However, when the temperature of the refrigerant at the evaporator becomes too low, system performance suffers. If the suction pressure falls too low, the system may experience problems, such as evaporator freezing, liquid slugging at the compressor and/or system instability.

In addition to the problem of an oversized condenser coil, there is a need to decrease the condenser "capacity" in order to maintain proper system operation. One approach to provide good system control and offset the excessive cooling that may result from an oversized coil includes a variable speed condenser fan used to control airflow over the condenser coil. As the amount of air passing over the coil decreases, the amount of heat transfer taking place at the coil decreases. Therefore, the temperature of the refrigerant in the condenser and the pressure of the system increase to allow the evaporator to cool the heat transfer fluid without system performance problems. The use of the variable speed condenser fan has the drawback that it is expensive and requires complicated wiring and controls. An alternate method used for condenser airflow control is to utilize multiple small condenser fans that may be cycled on and off as necessary. However, the flow resulting from multiple small condensers is stepped and provides predetermined levels of cooling capacity at the condenser based upon the number of fans activated. To provide adequate control a very large number of fans and independent controls for each fan are required, which is expensive and requires complicated wiring and/or controls.

Air-cooled condensers that are oversized often result in a system performance that degrades rapidly as the ambient temperature of the condenser air decreases. In order for these types of systems to operate effectively and reliably, the amount of cooling taking place at the condenser has to be reduced as the ambient temperature decreases. As discussed above, a common way to vary the performance of the condenser coil at lower ambient temperatures is to use multiple condenser fans controlled in such a way as to decrease the number of fans that are operating. As the number of fans in operation decreases, the volume of air drawn through the condenser coil is likewise decreased. Unfortunately, to provide sufficient control, particularly at low ambient temperature conditions, there must be a large number of condenser fans used, or excessive fan cycling will occur. Excessive fan cycling increases the amount of energy required to operate the condenser and increases the wear on the fans, which increases maintenance costs. This excessive fan cycling is due to the fact that the operating ambient temperature range when a fan is activated versus when the same fan is deactivated can have a significant gap. For example, the operating ambient temperature range for one system having a single fan activated may be 20°F - 35°F. However, the same system may include an operating ambient temperature range of 45°F - 60°F for two fans activated. Operational problems occur for this condenser system if the ambient temperature is between about 35°F and 45°F. In this temperature range, the second condenser fan may be cycled repeatedly with relatively small changes in temperature.

Therefore, what is needed is a method and apparatus for improving low ambient temperature operation and reliability in a high efficiency condenser, while not sacrificing high ambient temperature performance and overall system efficiency.

### SUMMARY OF THE INVENTION

The present invention includes a condenser arrangement for control of condenser temperature and condenser pressure and an HVAC system employing the condenser arrangement. The condenser arrangement includes a condenser coil and a plurality of fans disposed adjacent to the condenser coil. The plurality of fans are arranged and disposed to circulate air through the condenser coil. At least one baffle extending from a surface of the condenser coil is positioned between adjacent fans of the plurality of fans and forms a plurality of channels. The plurality of channels include a variable flow channel having a plurality of adjacent fans of the plurality of fans to control airflow through the channel. The condenser arrangement also includes a control system to control operation of the plurality of fans. The control system is configured to independently control each fan of the plurality of fans in response to a sensed condition.

The present invention also includes a method for controlling condenser pressure. The method includes providing a condenser arrangement having a condenser coil, a plurality of fans disposed adjacent to the condenser coil, and a plurality of channels extending from a surface of the condenser coil. The plurality of channels include a variable flow channel having a plurality of adjacent fans of the plurality of fans to control airflow through the channel. Air is circulated through the condenser coil by activating one or more of the plurality of fans. A condition of refrigerant in the condenser coil or a condition of inlet air to the condenser coil is sensed. At least one fan of the plurality of fans of the variable flow channel is deactivated in response to the sensed condition to lower airflow through the condenser coil. At least one active fan of the plurality of fans draws bypass air from an area adjacent to the at least one deactivated fan to further lower airflow through the condenser coil.

One advantage of the present invention is that condenser fan cycling is significantly reduced or even eliminated at all but the lowest ambient temperatures.

Another advantage of the present invention is improved system control by improving the overlaps in condenser performance between condenser fan stages.

Still another advantage of the present invention is that fewer condenser fans can be used resulting in a lower system cost.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 illustrates an embodiment of the present invention used in an HVAC or chiller system.

FIG. 2 illustrates an embodiment of the condenser arrangement of the present invention.

FIG. 3 illustrates the embodiment of the condenser arrangement shown in FIG. 2 operating according to an embodiment of the invention.

FIG. 4 illustrates the embodiment of the condenser arrangement shown in FIG. 2 operating according to another embodiment of the invention.

FIG. 5 illustrates the embodiment of the condenser arrangement shown in FIG. 2 operating according to still anther embodiment of the invention.

FIG. 6 illustrates the embodiment of the condenser arrangement shown in FIG. 2 operating according to still anther embodiment of the invention.

FIG. 7 illustrates an alternate embodiment of the condenser arrangement of the present invention.

Wherever possible, the same reference numbers will be used throughout the drawings to refer to the same or like parts.

### DETAILED DESCRIPTION OF THE INVENTION

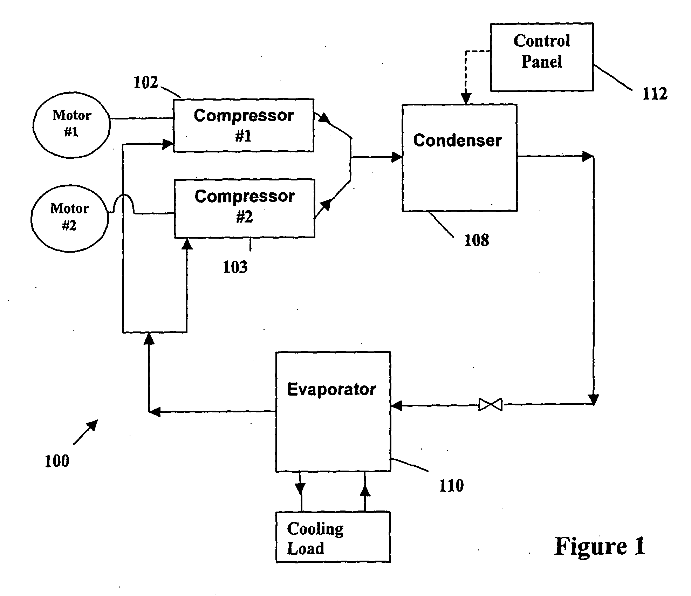

A general system to which the invention can be applied is illustrated in FIG. 1. As shown, the HVAC, refrigeration or liquid chiller system 100 has two compressors incorporated in a corresponding refrigerant circuit, but it is to be understood that the system 100 can have more than two compressors for providing the desired system load. The system 100 includes a first compressor 102 and a second compressor 103 operating in tandem or parallel, a condenser arrangement 108, expansion devices, a water chiller or evaporator arrangement 110 and a control panel 112. The control panel 112 can include an analog to digital (A/D) converter, a microprocessor, a non-volatile memory, and an interface board to control operation of the system 100. The control panel 112 receives input signals from the system 100, e.g., temperature and pressure measurements, that indicate the performance of the system 100, and also receives input signals corresponding to the surrounding ambient conditions, e.g., outdoor air temperature measurements, and then transmits signals to components of the system 100 to control the operation of the system 100. The present invention is not limited to the control panels discussed above and may include any suitable control system, capable of providing condenser fan control. A conventional HVAC, refrigeration or liquid chiller system 100 includes many other features that are not shown in FIG. 1. These features have been purposely omitted to simplify the drawing for ease of illustration. While the following description of system 100 is in terms of a HVAC system, it is to be understood that the invention could be applied to any refrigeration system or any liquid chiller system.

The first and second compressors 102 and 103 compress a refrigerant vapor and deliver it to the condenser arrangement 108 by discharge lines that are combined into a single line. In another embodiment of the present invention, separate discharge lines are used to deliver refrigerant vapor to the condenser arrangement 108, where the refrigerant vapor is combined. The first and second compressors 102 and 103 are preferably screw compressors or centrifugal compressors, however the compressors can be any suitable type of compressor including reciprocating compressors, scroll compressors, rotary compressors or other type of compressor. The refrigerant vapor delivered to the condenser 108 enters into a heat exchange relationship with a fluid, which is preferably air, and undergoes a phase change to a refrigerant liquid as a result of the heat exchange relationship with the fluid. The condensed liquid refrigerant from condenser arrangement 108 flows through corresponding expansion devices to an evaporator 110.

The refrigerant liquid delivered to the evaporator 110 enters into a heat exchange relationship with a fluid, e.g., air, water or secondary liquid, and undergoes a phase change to a refrigerant gas as a result of the heat exchange relationship with the fluid. The evaporator 110 can include connections for a supply line and a return line of the fluid. The fluid travels into the evaporator 110 via the return line and exits the evaporator 110 via the supply line. The liquid refrigerant in the evaporator 110 enters into a heat exchange relationship with the fluid to remove heat from the fluid. The vapor refrigerant in the evaporator 110 then returns to the first and second compressors 102 and 103 to complete the cycle. The vapor refrigerant in the evaporator 110 can be combined into a single line exiting the evaporator 110 that then splits or branches to deliver refrigerant vapor to the first and second compressors 102 and 103. In another embodiment of the present invention, the vapor refrigerant then returns to the first and second compressors 102 and 103 by separate suction lines to complete the cycle. It is to be understood that any suitable configuration of evaporator 110 can be used in the system 100, provided that the appropriate phase change of the refrigerant in the evaporator 110 is obtained.

To drive the first and second compressors 102 and 103, the system 100 includes a motor or drive mechanism for the first and second compressors 102 and 103. While the term "motor" is used with respect to the drive mechanism for the first and second compressors 102 and 103, it is to be understood that the term "motor" is not limited to a motor, but is intended to encompass any component that can be used in conjunction with the driving of motor, such as a variable speed drive and a motor starter. In a preferred embodiment of the present invention, the motor or drive mechanism is an electric motor and associated components. However, other drive mechanisms, such as steam or gas turbines or engines and associated components can be used to drive the first and second compressors 102 and 103.

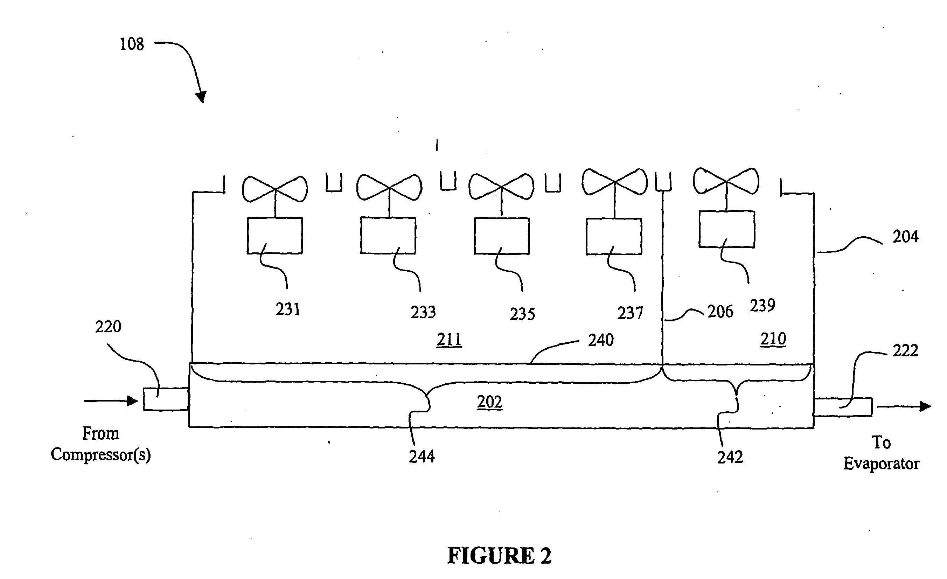

FIG. 2 illustrates schematically the condenser arrangement 108 of the present invention. The condenser arrangement 108 includes a condenser coil 202 disposed in a housing 204. The refrigerant vapor delivered to the condenser coil 202 enters through an coil inlet connection 220 and the condensed liquid refrigerant exiting the condenser coil 202 flows through a coil outlet connection 222. The condenser coil 202 can be any suitable type of coil arrangement that may be used for providing heat transfer with a circulating air or gas that passes through the coil and is preferably sized to accommodate the maximum output capacity of the first and second compressors 102 and 103. In addition, the condenser arrangement 108 includes first fan 231, second fan 233, third fan 235, fourth fan 237 and fifth fan 239 mounted in the housing 204. The first through fifth fans 231, 233, 235, 237 and 239 are positioned substantially transverse to the condenser coil 202 to draw air substantially perpendicularly through a face 240 of condenser coil 202. The substantially perpendicular flow of air through the condenser coil 202 permits the air to enter into a heat exchange relationship with the refrigerant in the condenser coil 202. In addition, while FIG. 2 illustrates 5 fans, it is to be understood that as few as 3 fans may be used and that as many as 10 or more fans could be used. While FIG. 2 shows the first through fifth fans 231, 233, 235, 237 and 239 mounted in the housing 204, it is to be understood that the first through fifth fans 231, 233, 235, 237 and 239 may be mounted in any suitable manner such that air is drawn through the coil 202 flows in a substantial perpendicular manner to face 240 of condenser coil 202.

The condenser arrangement 108 also includes a baffle 206 positioned between the fourth and fifth fans 237 and 239. "Baffle" as used herein includes a barrier having a structure configured to substantially prevent flow of air through the baffle and capable of channeling air in a direction from coil 202. Baffle 206 extends from the coil 202 towards the fourth and fifth fans 237 and 239 for a sufficient length to form a constant or fixed flow channel 210 for airflow between the baffle 206 and the housing 204. "Constant flow" as used herein indicates that the flow of air through channel 210 is substantially constant when the fifth fan 239 is operating, i.e., the flow of air in channel 210 is either occurring at a substantially constant rate based on operation of fifth fan 239 or no flow is occurring. Airflow through channel 210 and the channeled portion 242 of the condenser coil 202 corresponding to the channel 210 is isolated from the airflow through the remainder of the condenser arrangement 108, if any, by baffle 206. In addition, for channel 210, the flow of air through the channeled portion 242 of condenser coil 202 is substantially equal to the flow of air from the channel 210. In other words, the flow of air in channel 210 is limited to a single direction with a single entrance and single exit. The arrangement of channel 210 in this embodiment results in a substantially constant ratio of airflow to condenser coil surface area. For example, in the embodiment shown in FIG. 2, the airflow drawn when fifth fan 239 is operating passes through about ¹/₅ of the coil surface area condenser. Although FIG. 2 includes a single fifth fan 239 in channel 210, the present invention may include a plurality of fans within channel 210, provided that the fans are all activated and deactivated together or simultaneously.

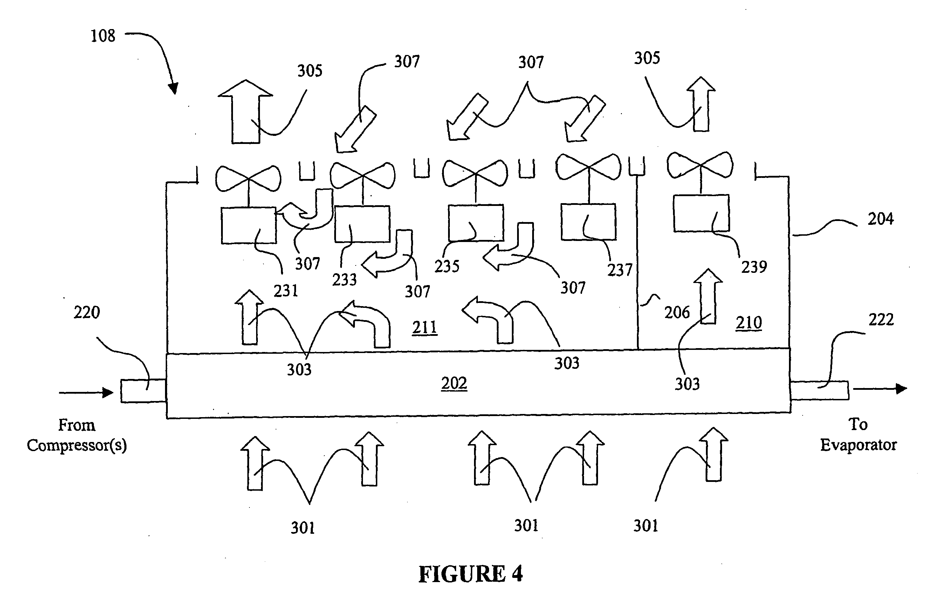

In addition to channel 210, the present invention further includes a variable flow channel 211, which draws air from mixed airflow portion 244 of the condenser coil 202. "Variable flow" as used herein indicates that flow in the channel 211 may be varied by selective activation and/or deactivation of one or more of the first through fourth fans 231, 233, 235 and 237 disposed in the channel 211. Unlike the constant flow channel 210, which provides a predetermined fraction or substantially constant ratio of airflow to condenser coil surface area, the variable flow channel 211 allows the fraction of airflow to be based upon the combination of fans activated or deactivated within the variable flow channel 211. Channel 211 includes the first through fourth fans 231, 233, 235 and 237, each of which are independently controlled and operated. Further, one or more of the first through fourth fans 231, 233, 235 and 237 may be deactivated, permitting air to enter channel 211 from the area of the deactivated fan(s) to provide a mixed airflow exiting channel 211. In an alternate embodiment of the invention, first through fourth fans 231, 233, 235 and 237 each include a plurality of fans, such as fan pairs, which may be dependently or independently activated and deactivated with the first through fourth fans 231, 233, 235 and 237. The mixed airflow includes a mixture of air drawn through the coil 202 and air drawn into channel 211 from the areas of the one or more deactivated fans (see e.g. FIGs. 4-6). Although FIG. 2 shows a constant flow channel 210 and a variable flow channel 211, in an alternate embodiment of the invention, the condenser arrangement 108 includes a plurality of variable flow channels 211, wherein the condenser arrangement 108 does not include a constant flow channel 210. In still another embodiment of the invention, the condenser arrangement 108 includes a plurality of variable flow channels 211, wherein the condenser arrangement 108 includes one or more constant flow channels 210.

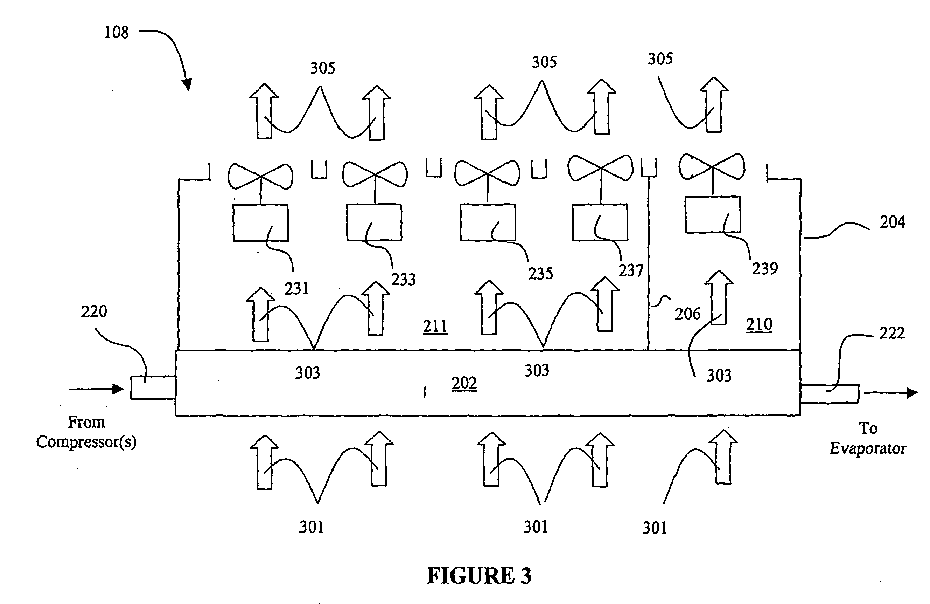

FIG. 3 shows the condenser arrangement 108 operating according to an embodiment of the invention. FIG. 3 shows each of the first through fifth fans 231, 233, 235, 237 and 239 being activated to provide a maximum airflow through condenser coil 202. The airflow through channel 210 includes airflow provided by fifth fan 239. The airflow through channel 211 includes airflow provided by a combination of first through fourth fans 231, 233, 235 and 237. When desirable to provide maximum airflow through the condenser coil 202, such as at times of higher ambient temperatures and/or during times of higher cooling requirements at the evaporator, each of the first through fifth fans 231, 233, 235, 237 and 239 may be activated. Inlet air 301 is drawn through the condenser coil 202 into the condenser arrangement 108 and into channels 211 and 210. The heated air 303 present in channels 210 and 211 is drawn by the first through fifth fans 231, 233, 235, 237 and 239 and are exhausted from condenser arrangement 108 as exhaust air 305.

FIG. 4 shows the condenser arrangement 108 operating according to another embodiment of the invention. FIG. 4 shows the first and fifth fans 231 and 239 activated and the second through the fourth fans 233, 235 and 237 inactivated. The combination of activated and inactivated fans provides for a mixture of air within channel 211. As in FIG. 3, airflow through channel 210 includes airflow provided by the fifth fan 239. However, in FIG. 4, airflow through channel 211 includes airflow provided by the first fan 231 only. Exhaust air 305 from fan 231 includes a mixture of heated air 303 drawn through the coil 202 and bypass or supplemental air 307, which is drawn from an exterior area of the condenser arrangement 108 through the areas of the deactivated second through fourth fans 233, 235 and 237. The operation shown in FIG. 4 includes the method for controlling the refrigerant conditions within the condenser coil 202 when the ambient temperature is low or the heat load on the system is reduced. One benefit of this arrangement is that a substantially quantity of air exhausted from channel 211 by the first fan 231 is now drawn through the condenser coil 202 and a reduced amount of air is used to remove heat from the system 100.

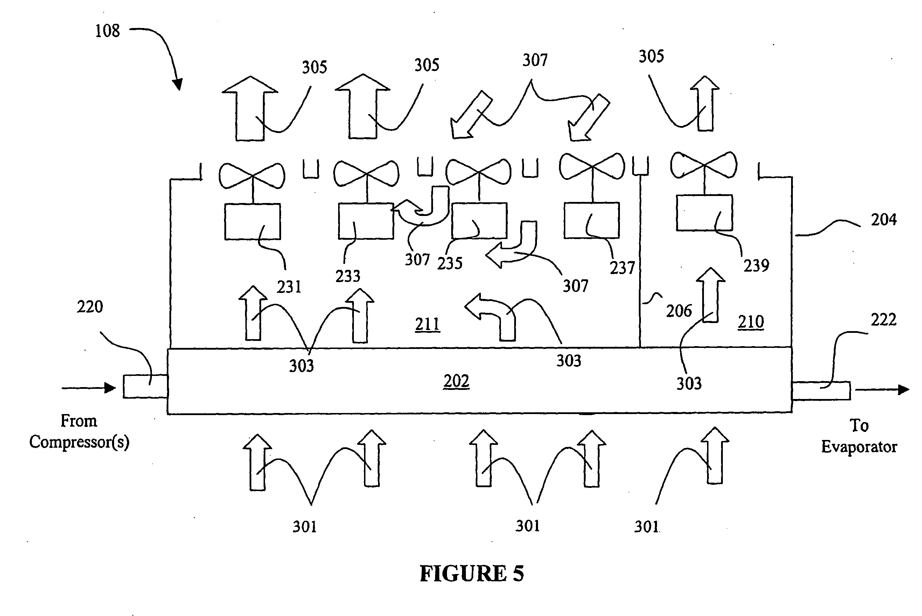

FIG. 5 shows the condenser arrangement 108 operating according to still another embodiment of the invention. FIG. 5 shows the first, second and fifth fans 231, 233 and 239 activated and the third and fourth fans 235 and 237 inactivated. The combination of activated and inactivated fans provides for a mixture of air within channel 211. As in FIG. 3, airflow through channel 210 includes airflow provided by the fifth fan 239. However, in FIG. 5, airflow through channel 211 includes airflow provided by the first and second fans 231 and 233. Exhaust air 305 from fans 231 and 233 include a mixture of heated air 303 drawn through the condenser coil 202 and bypass air 307, which is drawn from an exterior area of the condenser arrangement 108 through the areas of the deactivated third and fourth fans 235 and 237. The operation shown in FIG. 5 includes the method for controlling the refrigerant conditions within the condenser coil 202 when the ambient temperature is low or the heat load on the system is reduced.

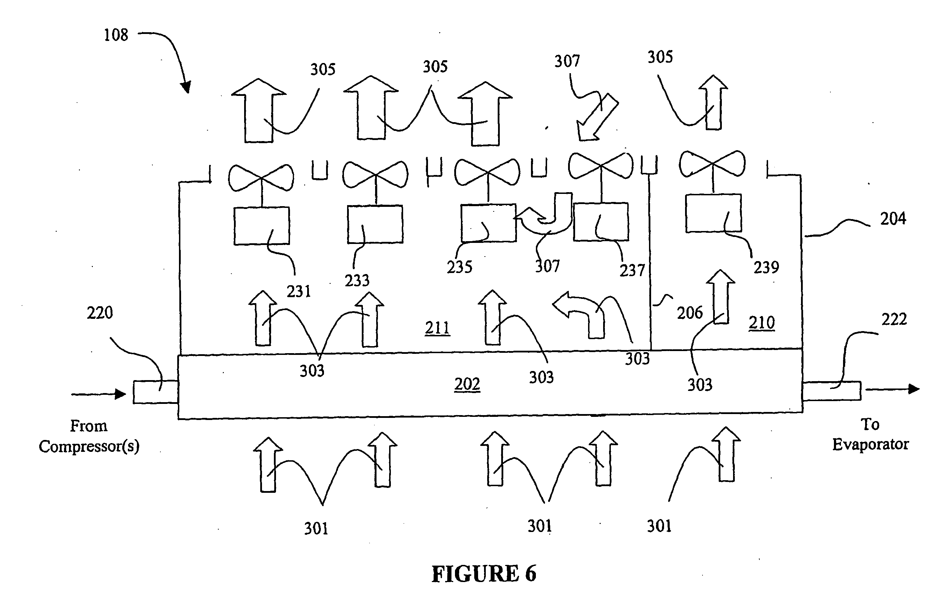

FIG. 6 shows the condenser arrangement 108 operating according to still another embodiment of the invention. FIG. 6 shows the first through third and fifth fans 231, 233, 235 and 239 activated and the fourth fan 237 inactivated. The combination of activated and inactivated fans provides for a mixture of air within channel 211. As in FIG. 3, airflow through channel 210 includes airflow provided by the fifth fan 239. However, in FIG. 6, airflow through channel 211 includes airflow provided by the first through third fans 231, 233 and 235. Exhaust air 305 from the first through third fans 231, 233 and 235 include a mixture of heated air 303 drawn through the condenser coil 202 and bypass air 307, which is drawn from an exterior area of the condenser arrangement 108 through the areas of the deactivated fourth fan 237. The operation shown in FIG. 6 includes the method for controlling the refrigerant conditions within the condenser coil 202 when the ambient temperature is low or the heat load on the system 100 is reduced.

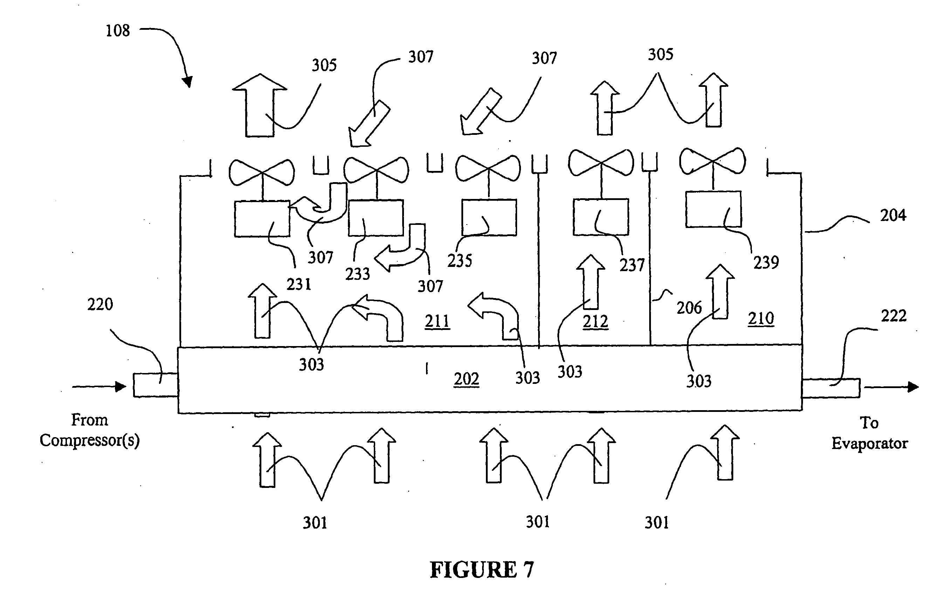

FIG. 7 shown an alternate embodiment of the present invention including a second baffle 208 can be positioned between the third and fourth fans 235 and 237. The second baffle 208 extends from the coil 202 towards the third and fourth fans 235 and 237 to form a channel 212 for airflow between the first baffle 206, the second baffle 208 and the housing 204. Airflow through the channel 212 and the portion of the condenser coil 202 corresponding to the channel 212 is isolated from the airflow through the remainder of the condenser arrangement 108, if any, and is controlled by the operation of the fourth fan 237. Like with the arrangement of channel 210 and first baffle 206, second baffle 208 is configured to substantially prevent any airflow through the channel 212 when the fourth fan 237 is deactivated. Also, like channel 210 described above, channel 212 may include a plurality of fans. Although FIGs. 2-7 show embodiments with the first or second baffles 206 and/or 208, any number of baffles may be used provided that at least one channel formed by the baffles include a plurality of fans. Further, although the condenser arrangement 108 shown in FIG. 7 includes channels 211, 212 and 210, wherein channel 211 is the only channel subject to variable airflows through the condenser coil 202, any combination of variable flow channels, such as channel 211 and constant flow channels, such as channels 210 and 212 may be utilized with the invention. Further still, the arrangement of fans and channels are not limited to the geometry shown in FIGs. 2-7, but may include any geometry and arrangement of fans that provides an airflow through the coil, and having a combination of constant flow channels and variable flow channels.

In addition to the positioning of the first baffle 206, and/or second baffle 208, the first through fifth fans 231, 233, 235, 237 and 239 may be controlled by the control panel 112 to generate a desired condenser temperature and/or condenser pressure when the condenser arrangement is operated at lower ambient conditions and lower load conditions. A reduction in outdoor ambient temperature and/or a decrease in system load reduces the number of the first through fifth condenser fans 231, 233, 235, 237 and 239 that remain activated by the control panel 112.

In one embodiment of the invention, the control panel 112 executes a control system that preferably uses control algorithm(s) or software to control operation of the system 100 and to determine and implement an operating configuration for the first through fifth fans 231, 233, 235, 237 and/or 239 of the condenser arrangement 108 to control the condenser temperature and/or condenser pressure. The control algorithm(s) may include computer programs or software stored in the non-volatile memory of the control panel and can include a series of instructions executable by the microprocessor of the control panel. While it is preferred that the control algorithm be embodied in a computer program(s) and executed by the microprocessor, it is to be understood that the control algorithm may be implemented and executed using digital and/or analog hardware by those skilled in the art. If hardware is used to execute the control algorithm, the corresponding configuration of the control panel can be changed to incorporate the necessary components and to remove any components that may no longer be required.

The control algorithm may sense system parameters and/or system conditions to generate the appropriate control signals for the first through fifth fans 231, 233, 235, 237 and/or 239 to obtain a desired condenser temperature and/or condenser pressure. Conditions sensed may include, but are not limited to refrigerant pressure, refrigerant temperature, inlet air temperature, outlet air temperature, or combinations thereof. For example, a predetermined set of conditions may allow the control algorithm to determine that the fifth fan 239 should be operated and the remaining first through fourth fans 231, 233, 235 and 237 should not be operated because the airflow through the predetermined ratio of condenser coil 202 resulting from operation of the fifth fan 239 provides the desired condenser temperature and/or condenser pressure. However, for another set of inputs the control algorithm may determine that the first fan 231 should be operated and the second through fifth fans 233, 235, 237 and 239 should not be operated because the airflow resulting from operation of the first fan 231 through channel 211 of condenser coil 202 not isolated from airflow by first baffle 206 provides the desired condenser temperature and/or condenser pressure. The control algorithm is not limited to the combinations above and may include any combination of the first through fifth fans 231, 233, 235, 237 and /or 239 to obtain the desired condenser coil temperature and/or condenser pressure.

In one embodiment of the invention, the control of the condenser arrangement 108 may include sensing an ambient temperature and utilizing a lookup table or similar control scheme that contains a predetermined combination of fans that corresponds to the ambient temperature sensed. For example, if the ambient temperature is between -10°C (15°F) and -4°C (25°F), the control panel 112 may deactivate fifth fan 239 and activate first fan 231. In addition, for ambient temperatures between -4°C (25°F) and 2°C (35°F) the control panel 112 may activate fifth fan 239 and activate first fan 231.

In another embodiment of the present invention, the control of the condenser arrangement may include sensing condensing pressure with a pressure sensing device, such as a pressure transducer, and providing a predetermined combination of fans corresponding to a condensing pressure range for a lookup table or similar control scheme. For example, if the pressure falls below a minimum pressure in a particular capacity step range, the combination of fans corresponding to the lower capacity are activated. Likewise, if the pressure rises above a maximum pressure in a particular capacity step range, the combination of fans corresponding to the higher capacity are activated.

While the invention has been described with reference to a preferred embodiment, it will be understood by those skilled in the art that various changes may be made without departing from the scope of the invention as defined by the appended claims.

## Claims

1. A condenser arrangement (108) comprising:
a condenser coil (202);
a plurality of fans (231, 233, 235, 237, 239) disposed adjacent to the condenser coil (202), the plurality of fans (231, 233, 235, 237, 239) being arranged and disposed to circulate air through the condenser coil (202);
**characterized in, that**
at least one baffle (206) positioned between adjacent fans of the plurality of fans (231, 233, 235, 237, 239), the at least one baffle (206) is configured and disposed to form a plurality of channels (210, 211) extending from a surface (240) of the condenser coil (202), the plurality of channels (210, 211) including at least one variable flow channel (211) having two or more fans of the plurality of fans (231, 233, 235, 237, 239) to control airflow through the at least one variable flow channel (211); and
a control system to control operation of the plurality of fans (231, 233, 235, 237, 239);
the control system is configured to independently control each fan of the plurality of fans (231, 233, 235, 237, 239) in response to a sensed condition to obtain a desired condenser operating condition.

2. The condenser arrangement of claim 1, wherein the at least on baffle (206) forms a plurality of variable flow channels (211) having two or more fans of the plurality of fans (231, 233, 235, 237, 239) to control airflow through the plurality of variable flow channels (211).

3. The condenser arrangement (108) of claim 1, wherein the condenser arrangement (108) includes a plurality of baffles (206).

4. The condenser arrangement (108) of claim 1, wherein the sensed conditions are selected from the group consisting of refrigerant pressure, refrigerant temperature, inlet air temperature, outlet air temperature, and combinations thereof.

5. The condenser arrangement (108) of claim 1, wherein the control system activates and deactivates a predetermined combination of the plurality of fans (231, 233, 235, 237, 239) in response to the sensed condition.

6. The condenser arrangement (108) of claim 1, further comprising at least one constant flow channel (210) formed by the at least one baffle (206), wherein the constant flow channel (210) includes an airflow that is substantially constant in a substantially singular direction when the fan (239) or fans arranged to circulate air through the constant flow channel (210) are operating.

7. An HVAC system (100) comprising:
a compressor (102, 103), an evaporator (110) and a condenser arrangement (108) according to one of the preceding claims connected in a closed refrigerant loop;

8. The system (100) of claim 7, wherein the system comprises a plurality of compressors (102, 103) connected in the closed refrigerant loop.

9. The system (100) of claim 7, wherein the system (100) comprises a plurality of closed refrigerant loops, wherein each of the plurality of closed refrigerant loops includes the condenser arrangement (108).

10. The system (100) of claim 7, wherein the condenser arrangement (108) includes a plurality of baffles (206).

11. A method for controlling a condenser operating condition comprising:
providing a condenser arrangement (108) having a condenser coil (202),
a plurality of fans (231, 233, 235, 237, 239) disposed adjacent to the condenser coil (202), and a plurality of channels (210, 211) extending from a surface (240) of the condenser coil (202), the channels including a variable flow channel (211) having two or more fans (231, 233, 235, 237) of the plurality of fans (231, 233, 235, 237, 239) to control airflow through the variable flow channel (211);
circulating air through the condenser coil (202) by activating one or more of the plurality of fans (231, 233, 235, 237, 239);
sensing a condition of refrigerant in the condenser coil (202) or a condition of inlet air to the condenser coil (202); and
**characterized by**,
independently deactivating at least one fan of the two or more fans (231, 233, 235, 237) of the variable flow channel in response to sensed condition to provide a mixture of air being discharged from the variable flow channel (211) comprising air through the condenser coil (202) and bypass air from an area adjacent a deactivated fan.

12. The method of claim 11, wherein the sensing step includes sensing conditions selected from the group consisting of refrigerant pressure, refrigerant temperature, inlet air temperature, outlet air temperature, and combinations thereof.

13. The method of claim 11, wherein the step of deactivating is in response to a sensed refrigerant pressure.

14. The method of claim 11, wherein the step of deactivating is in response to a sensed inlet air temperature

15. The method of claim 11, wherein the step of deactivating includes deactivation of a predetermined combination of two or more fan of the variable flow channel (211).

16. The method of claim 11, further comprising circulating air through at least one constant flow channel (210) formed by the at least one baffle (206), wherein the constant flow channel (210) provides airflow that is substantially constant in a substantially singular direction.

## Patentansprüche

1. Kondensatoranordnung (108), die Folgendes umfasst:
eine Kondensatorschlange (202);
mehrere Lüfter (231, 233, 235, 237, 239), die neben der Kondensatorschlange (202) angeordnet sind, wobei die mehreren Lüfter (231, 233, 235, 237, 239) dazu angeordnet sind, Luft durch die Kondensatorschlange (202) zu zirkulieren;
**gekennzeichnet durch**
mindestens eine Prallfläche (206), die zwischen
benachbarten Lüftern der mehreren Lüfter (231, 233, 235, 237, 239) positioniert ist, wobei die mindestens eine Prallfläche (206) dazu konfiguriert und angeordnet ist, mehrere Kanäle (210, 211) zu bilden, die sich von einer Fläche (240) der Kondensatorschlange (202) erstrecken, wobei die mehreren Kanäle (210, 211) mindestens einen variablen Strömungskanal (211) mit zwei oder mehr Lüftern der mehreren Lüfter (231, 233, 235, 237, 239) enthalten, um Luftstrom **durch** den mindestens einen variablen Strömungskanal (211) zu steuern; und
ein Steuersystem zur Steuerung des Betriebs der mehreren Lüfter (231, 233, 235, 237, 239); wobei das Steuersystem dazu konfiguriert ist, jeden Lüfter der mehreren Lüfter (231, 233, 235, 237, 239) als Reaktion auf einen erfassten Zustand unabhängig zu steuern, um einen gewünschten Kondensatorbetriebszustand zu erhalten.

2. Kondensatoranordnung nach Anspruch 1, wobei die mindestens eine Prallfläche (206) mehrere variable Strömungskanäle (211) mit zwei oder mehr Lüftern der mehreren Lüfter (231, 233, 235, 237, 239) bildet, um Luftstrom durch die mehreren variablen Strömungskanäle (211) zu steuern.

3. Kondensatoranordnung (108) nach Anspruch 1, wobei die Kondensatoranordnung (108) mehrere Prallflächen (206) enthält.

4. Kondensatoranordnung (108) nach Anspruch 1, wobei die erfassten Zustände aus der aus Kältemitteldruck, Kältemitteltemperatur, Einlasslufttemperatur, Auslasslufttemperatur und Kombinationen daraus bestehenden Gruppe ausgewählt sind.

5. Kondensatoranordnung (108) nach Anspruch 1, wobei das Steuersystem als Reaktion auf den erfassten Zustand eine vorbestimmte Kombination aus den mehreren Lüftern (231, 233, 235, 237, 239) aktiviert und deaktiviert.

6. Kondensatoranordnung (108) nach Anspruch 1, die weiterhin mindestens einen Konstantstromkanal (210) umfasst, der durch die mindestens eine Prallfläche (206) gebildet wird, wobei der Konstantstromkanal (210) einen Luftstrom enthält, der in einer im Wesentlichen einzelnen Richtung im Wesentlichen konstant ist, wenn der Lüfter (239) oder die Lüfter, der/die dazu angeordnet ist/sind, Luft durch den Konstantstromkanal (210) zu zirkulieren, im Betrieb sind.

7. HVAC-System (100), das Folgendes umfasst:
einen Verdichter (102, 103), einen Verdampfer (110) und eine Kondensatoranordnung (108) nach einem der vorhergehenden Ansprüche, die in einem geschlossenen Kältemittelkreislauf verbunden sind.

8. System (100) nach Anspruch 7, wobei das System mehrere Verdichter (102, 103) umfasst, die in dem geschlossenen Kältemittelkreislauf verbunden sind.

9. System (100) nach Anspruch 7, wobei das System (100) mehrere geschlossene Kältemittelkreisläufe umfasst, wobei jeder der mehreren geschlossenen Kältemittelkreisläufe die Kondensatoranordnung (108) enthält.

10. System (100) nach Anspruch 7, wobei die Kondensatoranordnung (108) mehrere Prallflächen (206) enthält.

11. Verfahren zum Steuern eines Kondensatorbetriebszustands, das Folgendes umfasst:
Bereitstellen einer Kondensatoranordnung (108) mit einer Kondensatorschlange (202),
mehrerer Lüfter (231, 233, 235, 237, 239), die neben der Kondensatorschlange (202) angeordnet sind, und mehrerer Kanäle (210, 211), die sich von einer Fläche (240) der Kondensatorschlange (202) erstrecken, wobei die Kanäle einen variablen Strömungskanal (211) enthalten, der zwei oder mehr Lüfter (231, 233, 235, 237) der mehreren Lüfter (231, 233, 235, 237, 239) aufweist, um Luftstrom durch den variablen Strömungskanal (211) zu steuern;
Zirkulieren von Luft durch die Kondensatorschlange (202) durch Aktivieren eines oder mehrerer der mehreren Lüfter (231, 233, 235, 237, 239);
Erfassen eines Zustands des Kältemittels in der Kondensatorschlange (202) oder eines Zustands der Einlassluft zu der Kondensatorschlange (202);
**gekennzeichnet durch**
unabhängiges Deaktivieren mindestens eines Lüfters der zwei oder mehr Lüfter (231, 233, 235, 237) des variablen Strömungskanals als Reaktion auf den erfassten Zustand, um ein Gemisch aus Luft bereitzustellen, das aus dem variablen Strömungskanal (211) abgeführt wird und Luft **durch** die Kondensatorschlange (202) und Umgehungsluft aus einem Bereich neben einem deaktivierten Lüfter umfasst.

12. Verfahren nach Anspruch 11, wobei der Erfassungsschritt das Erfassen von Zuständen, die aus der aus Kältemitteldruck, Kältemitteltemperatur, Einlasslufttemperatur, Auslasslufttemperatur und Kombinationen daraus bestehenden Gruppe ausgewählt sind, umfasst.

13. Verfahren nach Anspruch 11, wobei der Deaktivierungsschritt als Reaktion auf einen erfassten Kältemitteldruck erfolgt.

14. Verfahren nach Anspruch 11, wobei der Deaktivierungsschritt als Reaktion auf eine erfasste Einlasslufttemperatur erfolgt.

15. Verfahren nach Anspruch 11, wobei der Deaktivierungsschritt Deaktivierung einer vorbestimmten Kombination aus zwei oder mehr Lüftern des variablen Strömungskanals (211) umfasst.

16. Verfahren nach Anspruch 11, das weiterhin Zirkulieren von Luft durch mindestens einen Konstantstromkanal (210) umfasst, der durch die mindestens eine Prallfläche (206) gebildet wird, wobei der Konstantstromkanal (210) einen Luftstrom bereitstellt, der in einer im Wesentlichen einzelnen Richtung im Wesentlichen konstant ist.

## Revendications

1. Agencement de condenseur (108), comprenant:
une bobine de condenseur (202);
une pluralité de ventilateurs (231, 233, 235, 237, 239) disposés à proximité de la bobine de condenseur (202), les ventilateurs de la pluralité de ventilateurs (231, 233, 235, 237, 239) étant agencés et disposés de manière à faire circuler de l'air à travers la bobine de condenseur (202);
**caractérisé par**:
au moins un déflecteur (206) positionné entre des ventilateurs voisins de la pluralité de ventilateurs (231, 233, 235, 237, 239), ledit au moins un déflecteur (206) étant configuré et disposé de manière à former une pluralité de canaux (210, 211) qui s'étendent à partir d'une surface (240) de la bobine de condenseur (202), la pluralité de canaux (210, 211) comprenant au moins un canal à écoulement variable (211) comprenant deux ou plus de deux ventilateurs de la pluralité de ventilateurs (231, 233, 235, 237, 239) afin de commander un écoulement d'air à travers ledit au moins un canal à écoulement variable (211); et
un système de commande pour commander le fonctionnement de la pluralité de ventilateurs (231, 233, 235, 237, 239),
le système de commande est configuré de manière à commander indépendamment chaque ventilateur de la pluralité de ventilateurs (231, 233, 235, 237, 239) en réponse à une condition détectée pour obtenir une condition de fonctionnement du condenseur souhaitée.

2. Agencement de condenseur selon la revendication 1, dans lequel ledit au moins un déflecteur (206) forme une pluralité de canaux à écoulement variable (211) qui comprennent deux ou plus de deux ventilateurs de la pluralité de ventilateurs (231, 233, 235, 237, 239) afin de commander l'écoulement d'air à travers la pluralité de canaux à écoulement variable (211).

3. Agencement de condenseur (108) selon la revendication 1, dans lequel l'agencement de condenseur (108) comprend une pluralité de déflecteurs (206).

4. Agencement de condenseur (108) selon la revendication 1, dans lequel les conditions détectées sont sélectionnées dans le groupe comprenant la pression du frigorigène, la température du frigorigène, la température de l'air d'entrée, la température de l'air de sortie et des combinaisons de celles-ci.

5. Agencement de condenseur (108) selon la revendication 1, dans lequel le système de commande active et désactive une combinaison prédéterminée de la pluralité de ventilateurs (231, 233, 235, 237, 239) en réponse à la condition détectée.

6. Agencement de condenseur (108) selon la revendication 1, comprenant en outre au moins un canal à écoulement constant (210) formé par ledit au moins un déflecteur (206), dans lequel le canal à écoulement constant (210) comprend un écoulement d'air qui est sensiblement constant dans une direction essentiellement unique lorsque le ventilateur (239) ou des ventilateurs agencé(s) pour faire circuler de l'air à travers le canal à écoulement constant (210) fonctionne(nt).

7. Système CVCA (100), comprenant un compresseur (102, 103), un évaporateur (110) et un agencement de condenseur (108) selon l'une quelconque des revendications précédentes connectés en une boucle de frigorigène fermée.

8. Système (100) selon la revendication 7, dans lequel le système comprend une pluralité de compresseurs (102, 103) connectés dans la boucle de frigorigène fermée.

9. Système (100) selon la revendication 7, dans lequel le système (100) comprend une pluralité de boucles de frigorigène fermées, dans lequel chaque boucle de la pluralité de boucles de frigorigène fermées comprend l'agencement de condenseur (108).

10. Système (100) selon la revendication 7, dans lequel l'agencement de condenseur (108) comprend une pluralité de déflecteurs (206).

11. Procédé de commande d'une condition de fonctionnement de condenseur, comprenant les étapes suivantes:
fournir un agencement de condenseur (108) comprenant une bobine de condenseur (202),
une pluralité de ventilateurs (231, 233, 235, 237, 239) disposés à proximité de la bobine de condenseur (202), et une pluralité de canaux (210, 211) qui s'étendent à partir d'une surface (240) de la bobine de condenseur (202), les canaux comprenant un canal à écoulement variable (211) comprenant deux ou plus de deux ventilateurs (231, 233, 235, 237) de la pluralité de ventilateurs (231, 233, 235, 237, 239) afin de commander l'écoulement d'air à travers le canal à écoulement variable (211);
faire circuler de l'air à travers la bobine de condenseur (202) en activant un ou plusieurs ventilateurs de la pluralité de ventilateurs (231, 233, 235, 237, 239);
détecter une condition du frigorigène dans la bobine de condenseur (202) ou une condition de l'air d'entrée dans la bobine de condenseur (202); et
**caractérisé par** la désactivation indépendante d'au moins un ventilateur des deux ou plus de deux ventilateurs (231, 233, 235, 237) du canal à écoulement variable en réponse à une condition détectée afin de créer un mélange d'air qui est déchargé à partir du canal à écoulement variable (211) qui se compose de l'air présent à travers la bobine de condenseur (202) et d'air de dérivation provenant d'une région proche d'un ventilateur désactivé.

12. Procédé selon la revendication 11, dans lequel l'étape de détection comprend la détection de conditions sélectionnées dans le groupe comprenant la pression du frigorigène, la température du frigorigène, la pression de l'air d'entrée, la température de l'air de sortie et des combinaisons de celles-ci.

13. Procédé selon la revendication 11, dans lequel l'étape de désactivation est exécutée en réponse à une pression détectée du frigorigène.

14. Procédé selon la revendication 11, dans lequel l'étape de désactivation est exécutée en réponse à une température détectée de l'air d'entrée.

15. Procédé selon la revendication 11, dans lequel l'étape de désactivation comprend la désactivation d'une combinaison prédéterminée de deux ou plus de deux ventilateurs du canal à écoulement variable (211).

16. Procédé selon la revendication 11, comprenant en outre la mise en circulation d'air à travers au moins un canal à écoulement constant (210) formé par ledit au moins un déflecteur (206), dans lequel le canal à écoulement constant (210) fournit un écoulement d'air qui est sensiblement constant dans une direction essentiellement unique.
